# EUROPEAN PATENT APPLICATION

(11) **EP 3 560 729 A1**
(43) Date of publication of application: **30.10.2019**
(21) Application number: 18184068.7
(22) Date of filing: 17.07.2018
(51) Int. Cl.: B60B 17/00, B60B 37/04

(54) **MECHANICALLY FASTENED WHEEL ASSEMBLY**

(30) Priority: 26.04.2018 US 201815963430
(71) Applicant: Penn Machine Company LLC, Blairsville, PA 15717 (US)
(72) Inventor: HOLT, Gregory E., Blairsville, PA 15717 (US); WILLIAMS, Todd, Blairsville, PA 15717 (US)
(74) Representative: Foot, Paul Matthew James

(57) **Abstract**

Aspects of the disclosure provide a wheel assembly for a vehicle that includes a wheel, an axle that fits into the center of the wheel creating an interface between the wheel and the axle, and a plurality of pins that are pressed into a plurality of holes at the interface of the wheel and the axle. The pins may lock the wheel to the axle and carry a dynamic load and a static load of the vehicle. Additionally, the wheel assembly may include a bearing and a bearing end cap that applies a force to the bearing by pushing against the wheel with a plurality of screws that are threaded into the end of the axle through the bearing end cap. The force may be generated on the bearing end cap by tightening the screws with the force transferred through the wheel to load the bearing.

## Description

This application claims priority to U.S. Application Serial No. 15/963,430, filed April 26, 2018 which claims priority to U.S. Provisional Application Serial No. 62/490,153, filed April 26, 2017, which are both incorporated herein by reference in their entirety.

### BACKGROUND

The current state of art for attaching rail wheels to an axle is to utilize an interference press fit at the wheel/axle interface. This process requires large specialized presses and the removal of the entire truck from the rail car with the total disassembly of the truck to press off and on the wheels. A wheel design that allows the easy removal without the need to remove and disassemble the truck (and the frame that holds the axles) will be a major improvement.

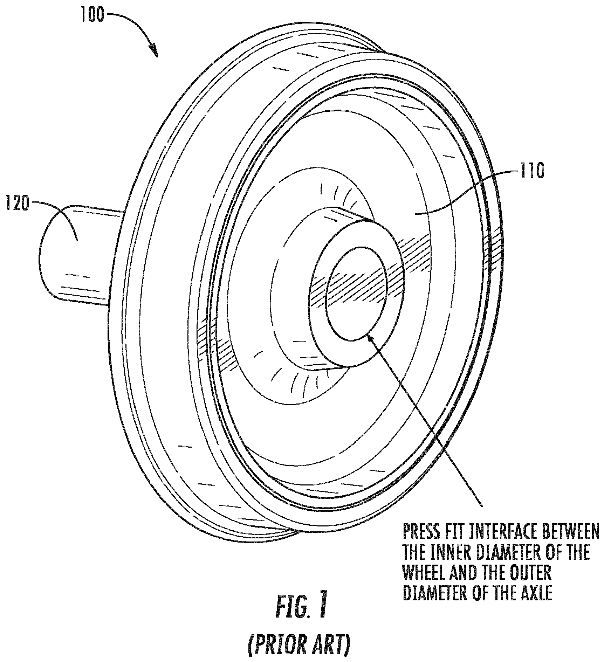

The current state of the art utilizes an interference press fit to secure the wheel to the axle. (as illustrated in FIG. 1). This process/procedure requires a specialized press capable of forces over 100 tons, or specifically a specialized 400-ton press to remove and attach the wheel. The operation requires various lubrication formulas that may be difficult to develop and/or process. The operation also requires highly-specialized knowledge by the press operators to assure proper and safe fit of the wheel to the axle. The press fit design also has a high risk of damage to both the wheel and the axle if all parameters are not within very tight tolerances. For example, the tight tolerance required between the wheel and the shaft of the current design may be approximately 0.002 inches. The risk of damage is also very high with the pressing of a wheel during wheel replacement.

Additionally, as the current state of the art requires a large, factory-based press machine, it is not possible to change wheels in the field or on the rail. The current state of the art requires the changing of the wheels at the factory where the specialized press machine is available.

### BRIEF SUMMARY

The following presents a simplified summary of the invention in order to provide a basic understanding of some aspects of the disclosure. This summary is not an extensive overview of the invention. It is not intended to identify key or critical elements of the invention or to delineate the scope of the invention. The following summary merely presents some concepts of the invention in a simplified form as a prelude to the more detailed description provided below.

A first aspect of the disclosure provides a wheel assembly for a vehicle comprising: a wheel; an axle with an end that fits into the center of the wheel thereby creating an interface between the wheel and the axle; and a plurality of pins that are pressed into a plurality of pre-machined holes at the interface of the wheel and the axle. The plurality of pins may lock the wheel to the axle and carry a dynamic load and a static load of the vehicle.

Another aspect of the disclosure provides a rail wheel assembly for use with a rail vehicle on a rail, the rail wheel assembly comprising: a rail wheel; an axle with an end that fits into the center of the rail wheel thereby creating an interface between the rail wheel and the axle; and a plurality of pins that are pressed into a plurality of pre-machined holes at the interface of the rail wheel and the axle. The plurality of pins may be geometrically and evenly spaced around the rail wheel. The plurality of pins may lock the rail wheel to the axle and carry a dynamic load and a static load of the rail vehicle on the rail. A first set of one or more half-circle grooves may be machined into an inside diameter of the rail wheel parallel to a centerline axis. A second set of one or more half-circle grooves may be machined on an outside diameter of the axle. The first set of grooves and the second set of grooves may mate and align to create the plurality of holes.

In another aspect of the disclosure provides a wheel assembly for use with a vehicle, the wheel assembly comprising: a wheel; an axle with an end that fits into the center of the wheel thereby creating an interface between the wheel and the axle; a plurality of pins that are pressed into a plurality of pre-machined holes at the interface of the wheel and the axle; and a bearing and a bearing end cap that applies a force to the bearing by pushing against the wheel. The plurality of pins may be geometrically and evenly spaced around the wheel. The plurality of pins may lock the wheel to the axle and carry a dynamic load and a static load of the vehicle. The bearing end cap may apply the force to the bearing by a plurality of screws that are threaded into the end of the axle through the bearing end cap. The force may be generated on the bearing end cap by tightening the screws and the force is transferred through the wheel to load the bearing.

The details of these and other embodiments of the present disclosure are set forth in the accompanying drawings and the description below. Other features and advantages of the disclosure will be apparent form the description and drawings.

### BRIEF DESCRIPTION OF THE DRAWINGS

The present invention is illustrated by way of example and not limited in the accompanying figures in which like reference numerals indicate similar elements and in which:
FIG. 1 depicts a perspective view of an example prior art press-fit wheel/axle assembly, according to one or more aspects described herein.
FIG. 2 depicts a perspective view of an assembled example wheel assembly according to one or more aspects described herein.
FIG. 3 depicts a perspective exploded view of the wheel assembly from FIG. 2 according to one or more aspects described herein.
FIG. 4 depicts a second perspective view of the wheel assembly from FIG. 2 according to one or more aspects described herein.
FIG. 5 depicts a front view of the assembled wheel assembly from FIG. 2 according to one or more aspects described herein.
FIG. 6 depicts a perspective exploded view of another example wheel assembly according to one or more aspects described herein.
FIG. 7 depicts a perspective view of the assembled wheel assembly illustrated in FIG. 6 according to one or more aspects described herein.
FIG. 8 depicts a perspective view of a cross-section view of the wheel assembly illustrated in FIG. 6 according to one or more aspects described herein.
FIGS. 9A and 9B depict an exemplary finite element analysis of the prior art press-fit wheel/axle assembly from FIG. 1, according to one or more aspects described herein.
FIGS. 10A and 10B depict an exemplary finite element analysis of the example wheel assembly from FIGS. 2 and 6 according to one or more aspects described herein.

Further, it is to be understood that the drawings may represent the scale of different components of one single embodiment; however, the disclosed embodiments are not limited to that particular scale.

### DETAILED DESCRIPTION

Aspects of this disclosure relate to a wheel design and wheel/axle interface that allows rail wheels to be changed quickly without the need for major disassembly of the rail vehicle. Aspects ofthis disclosure also relate to a wheel design and wheel/axle interface that reduces the need for high cost press equipment for this change. While this wheel assembly is designed specifically for rail wheels, this wheel assembly design may be utilized with any transit system that utilizes press-fit wheel/axle assemblies.

In the following description of various example structures according to the invention, reference is made to the accompanying drawings, which form a part hereof, and in which are shown by way of illustration various example devices, systems, and environments in which aspects of the invention may be practiced. It is to be understood that other specific arrangements of parts, example devices, systems, and environments may be utilized and structural and functional modifications may be made without departing from the scope of the present invention. Also, while the terms "top," "bottom," "front," "back," "side," "rear," and the like may be used in this specification to describe various example features and elements of the invention, these terms are used herein as a matter of convenience, e.g., based on the example orientations shown in the figures or the orientation during typical use. Nothing in this specification should be construed as requiring a specific three dimensional orientation of structures in order to fall within the scope of this invention. Also, the reader is advised that the attached drawings are not necessarily drawn to scale.

The following terms are used in this specification, and unless otherwise noted or clear from the context, these terms have the meanings provided below. "Plurality" indicates any number greater than one, either disjunctively or conjunctively, as necessary, up to an infinite number.

In the following description of the various embodiments, reference is made to the accompanying drawings, which form a part hereof, and in which is shown, by way of illustration, various embodiments in which aspects of the disclosure may be practiced. It is to be understood that other embodiments may be utilized and structural and functional modifications may be made without departing from the scope and spirit of the present disclosure

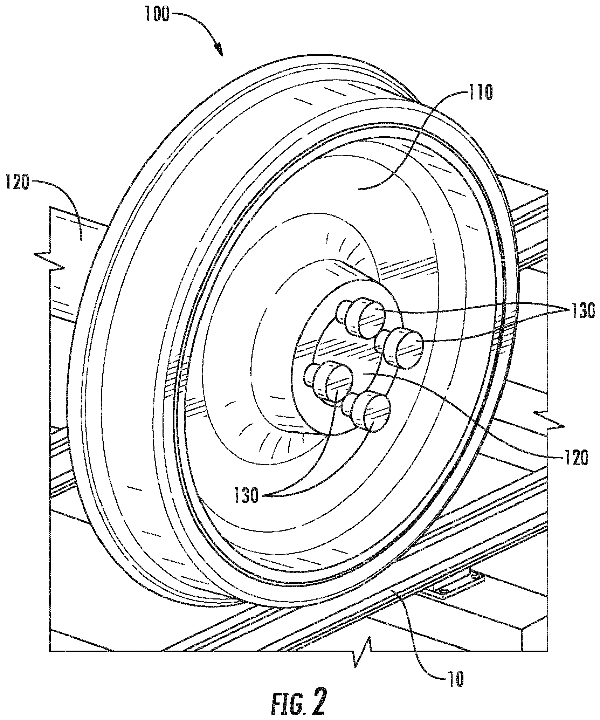

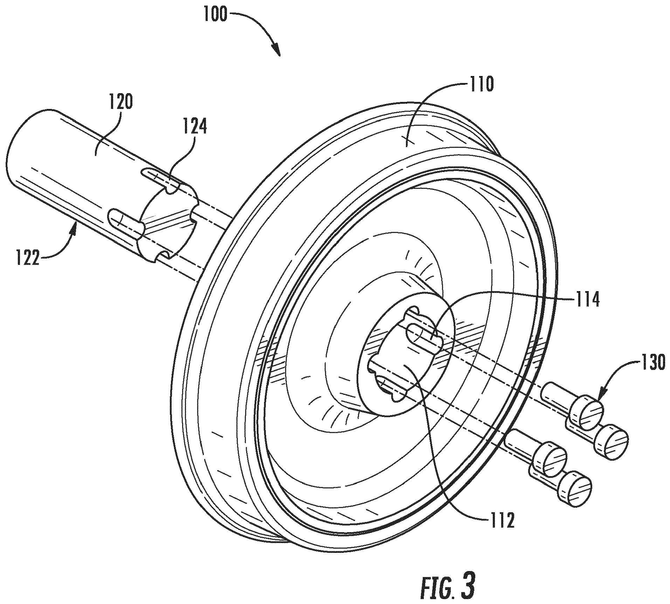

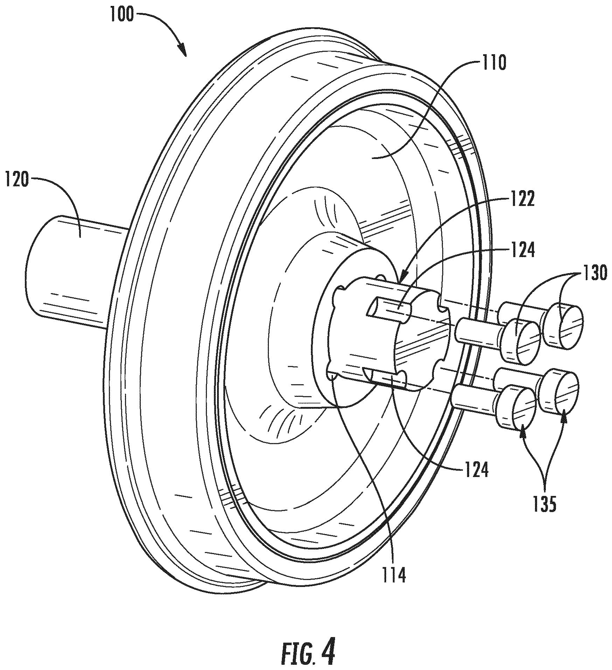

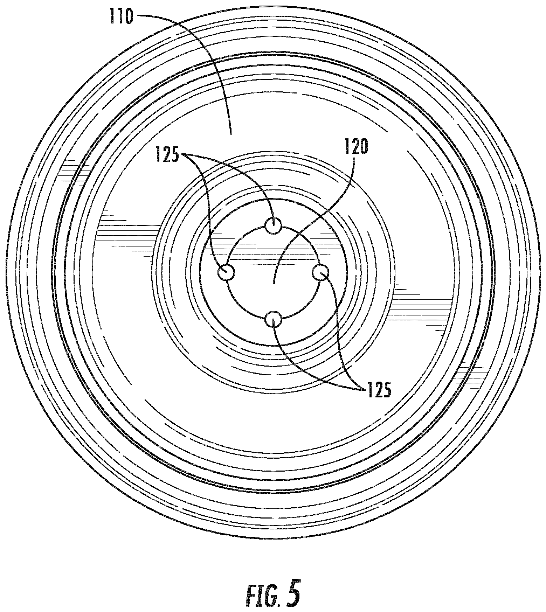

FIGS. 2-5 depict an example wheel assembly 100 according to one or more aspects described herein. Specifically, FIG. 2 depicts a perspective view of the assembled example wheel assembly 100 on a rail 10 according to one or more aspects described herein. FIG. 3 depicts a perspective exploded view of the example wheel assembly 100 according to one or more aspects described herein. FIG. 4 depicts a second perspective view of the example wheel assembly 100 according to one or more aspects described herein. FIG. 5 depicts a front view of the assembled example wheel assembly 100 according to one or more aspects described herein.

As illustrated in FIGS. 2-5, aspects of this invention are directed towards a wheel assembly 100 that includes a pinned joint between a wheel 110 and an axle 120. The wheel assembly 100 may include round pins 130 pressed into pre-machined grooves 125 at the interface of the wheel 110 and the axle 120. The pins 130 may lock the wheel 110 to the axle 120 and carry the dynamic and static loads of the rail vehicle on the rail 10.

The pins 130 may be pressed into the grooves/holes 125 and pulled out of the grooves/holes 125 with a specialized tool. The pins 130 may be pressed into the interface/holes/grooves 125 via a specialized portable press that may attach to the axle 120 and the pins 130. This press may also be capable of removing the pins 130 from the wheel/axle interface/holes/grooves 125. The pins 130 may have a unique head 135 that will allow the press to grab the pins 130 for this operation.

As illustrated in FIGS. 2-5, the wheel assembly 100 may include four pins 130. The four pins 130 may be geometrically and evenly spaced around the wheel 110. Additionally, with other aspects ofthe invention, a plurality ofpins 130 may be utilized without departing form this invention, ranging from two pins to ten or even more pins. For example, six pins 130 may be utilized and evenly spaced around the wheel 110. In another example, three pins 130 may be utilized and evenly spaced around the wheel 110. In another example, five pins 130 may be utilized and even spaced around the wheel 110.

Additionally, as the number of pins 130 increases, the diameter of the pins 130 may decrease. For example, more pins 130 utilized and press fit into the wheel 110 may require a smaller diameter pin 130. Additionally, as the number of pins 130 decreases, the diameter of the pins 130 may increase. For example, less pins 130 utilized and press fit into the wheel 110 may require a larger diameter pin 130.

As discussed above and illustrated in FIGS. 2-5, the wheel assembly 100 includes a pinned joint between the wheel 110 and axle 120. The wheel 110 may be machined to allow a sliding fit over the axle 120. As specifically illustrated in FIGS. 3 and 4, a first set of one or more half-circle grooves 114 may be machined into an inside diameter 112 of the wheel 110 parallel to a centerline axis. Additionally, a second set of one or more half-circle grooves 124 may be machined on an outside diameter 122 of the axle 120. The second set of half-circle grooves 124 on the outside diameter 122 of the axle 120 mate with the first set of half-circle grooves 114 on the inside diameter 112 of the wheel 110. During the assembly of the wheel assembly 100 with the wheel 110 and axle 120, the first set of half-circle grooves 114 will be aligned with the second set of half-circle grooves 124. The alignment ofthe first set of half-circle grooves 114 and the second set of half-circle grooves 124 creates one or more holes 125. The number of first set of half-circle grooves 114, second set of half-circle grooves 124, and holes 125 matches the number of pins 130 utilized with the wheel assembly 100. Using a specialized portable press machine, a plurality of pins 130 may be inserted into the holes 125 that the mating of the half-circle grooves 112, 122 create. The pins 130 will "lock" the wheel 110 to the axle 120.

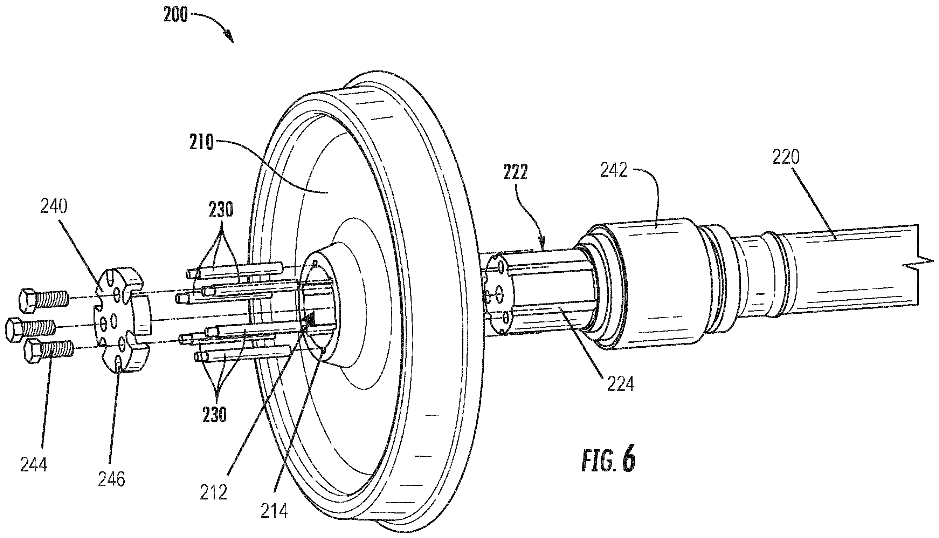

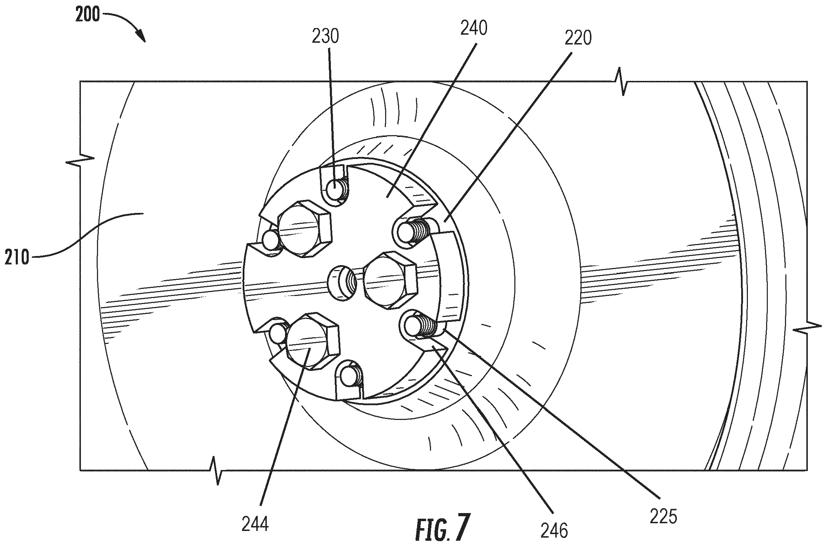

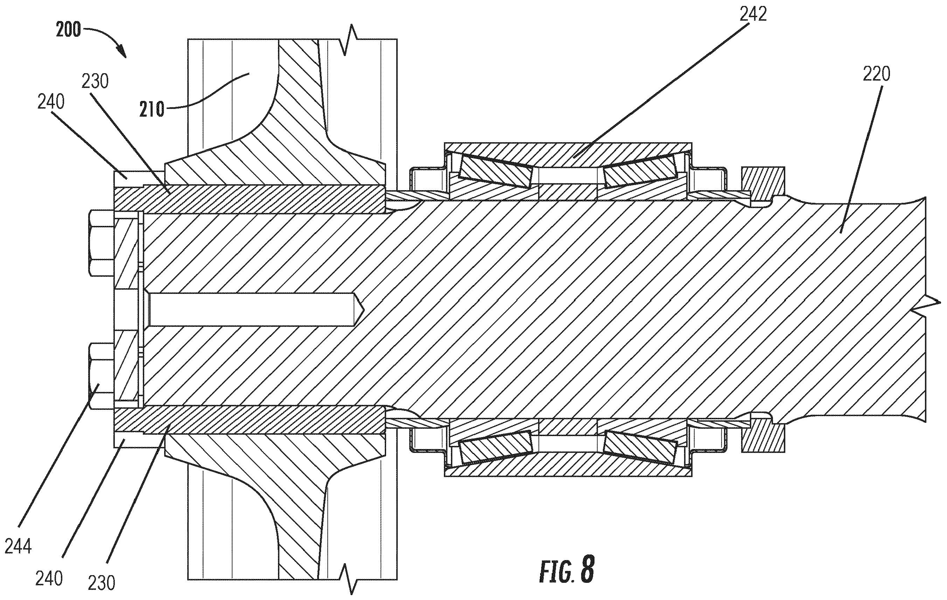

FIGS. 6-8 illustrate a second embodiment of a wheel assembly 200 according to one or more aspects described herein. The wheel assembly 200 illustrated in FIGS. 6-8 is compatible with a journal bearing configuration 242 and the addition of a bearing end cap 240. Specifically, FIG. 6 depicts a perspective exploded view of the wheel assembly 200. FIG. 7 depicts a perspective view of the wheel assembly 200. FIG. 8 depicts a cross-section view of the wheel assembly 200.

As illustrated in FIGS. 6-8, aspects of this invention are directed towards a wheel assembly 200 that includes a pinned joint between a wheel 210 and an axle 220. The wheel assembly 200 may include round pins 230 pressed into pre-machined grooves 225 at the interface of the wheel 210 and the axle 220. The pins 230 may lock the wheel 210 to the axle 220 and carry the dynamic and static loads of the rail vehicle.

Additionally, as illustrated in FIGS. 6-8, the wheel assembly may include a bearing end cap 240. The purpose of the bearing end cap 240 is to apply a side force to the journal bearing 242. A side force may be necessary to load the bearing 242 to eliminate premature wear. Exemplary load values are define in the Association of American Railroads Manual of Standards and Recommended Practices, Section G-II in Rules 1.8.3.1 and 1.8.3.2 and Paragraph 2.1.2.2. In a typical wheel/axle design where the wheel 210 is interference pressed onto the axle 220, the wheel 210 may be pressed against the bearing 242 to apply the load. The interference fit then holds the load against the bearing 242. In the embodiment illustrated in FIGS. 6-8, the wheel 210 simply slides onto the axle 220 and no load is applied to the journal bearing 242. Therefore, the bearing end cap 240 applies a force to the bearing 242 by pushing against the wheel 210. The bearing end cap 240 applies a force to the bearing 242 by a plurality of screws 244 that are threaded into the end of the axle 220 through the bearing end cap 240. By tightening the screws 244, a force is generated on the bearing end cap 240 that is transferred through the wheel 210 to load the journal bearing 242. The plurality of screws 244 may be any mechanical fastener or screw that is known and used in the art.

The bearing end cap 240 may include a plurality of slots 246 that allow the plurality of pins 230 to be pressed into the wheel/axle interface/holes/grooves 225. The number of slots 246 matches the number of pins 230. Additionally the plurality of screws 244 may be threaded through the bearing end cap 240 on an inside portion of the bearing end cap and inside the circumference of the slots 246 where the pins 230 are pressed into the holes 225.

The pins 230 may be pressed into the grooves/holes 225 and pulled out of the grooves/holes 225 with a specialized tool. The pins 230 may be pressed into the interface/holes/grooves 225 via a specialized portable press that may attach to the axle 220 and the pins 230. This press may also be capable of removing the pins 130 from the wheel/axle interface/holes/grooves 225. The pins 230 may have a unique head 235 that will allow the press to grab the pins 230 for this operation.

As illustrated in FIGS. 6-8, the wheel assembly 200 may include five pins 230. The five pins 230 may be geometrically and evenly spaced around the wheel 210. Additionally, with other aspects of the invention, a plurality ofpins 230 may be utilized without departing form this invention, ranging from two pins to ten or even more pins. For example, four pins 230 or six pins 230 may be utilized and evenly spaced around the wheel 210. In another example, three pins 230 may be utilized and evenly spaced around the wheel 210.

Additionally, as the number of pins 230 increases, the diameter of the pins 230 may decrease. For example, more pins 230 utilized and press fit into the wheel 210 may require a smaller diameter pin 230. Additionally, as the number of pins 230 decreases, the diameter of the pins 230 may increase. For example, less pins 230 utilized and press fit into the wheel 210 may require a larger diameter pin 230.

As discussed above and illustrated in FIGS. 6-8, the wheel assembly 200 includes a pinned joint between the wheel 210 and axle 220. The wheel 210 may be machined to allow a sliding fit over the axle 220. As specifically illustrated in FIG. 6, a first set of one or more half-circle grooves 214 may be machined into an inside diameter 212 of the wheel 210 parallel to a centerline axis. Additionally, a second set of one or more half-circle grooves 224 may be machined on an outside diameter 222 of the axle 220. The second set of half-circle grooves 224 on the outside diameter 222 of the axle 220 mate with the first set of half-circle grooves 214 on the inside diameter 212 of the wheel 210. During the assembly of the wheel assembly 200 with the wheel 210 and axle 220, the first set of half-circle grooves 214 will be aligned with the second set of half-circle grooves 224. The alignment of the first set of half-circle grooves 214 and the second set of half-circle grooves 224 creates one or more holes 225. The number of first set of half-circle grooves 214, second set of half-circle grooves 224, and holes 225 matches the number of pins 230 utilized with the wheel assembly 200. Using a specialized portable press machine, a plurality of pins 230 may be inserted into the holes 225 that the mating of the half-circle grooves 212, 222 create. The pins 230 will "lock" the wheel 210 to the axle 220.

For the embodiments illustrated in FIGS. 2-5 and 6-8, the removal of the wheel 110, 210 from the axle 120, 220 utilizes a reverse process of the steps listed above. While aspects of the invention include having holes 125, 225 cut axially on the perimeter of the axle 120, 220 and the wheel 110, 210, there are various embodiments that may assist with the removal of the wheel 110, 210 from the axle 120, 220.

The wheel assembly 100, 200 may include the removal of the wheel 110, 210 from the axle 120,220 that may be accomplished with removable pins 130,230. For example, removable pins 130, 230 may be press-fit pins that have a shoulder 135, 235 or hole to grab onto that would allow the pins 130, 230 to be removed. A tool similar to a gear puller could be utilized to pull out the pins 130, 230 evenly.

In another embodiment without departing from this invention, the removal of the wheel 110, 210 from the axle 120, 220 may be accomplished by removing the wheel 110, 210. The wheel assembly 100, 200 may include pins 130, 230 that may be press fit in the holes 125, 225 and the wheel 110, 210 could then be pulled off with a similar tool to a gear puller. Slots or holes may need to be made in the thick part near the center of the wheel 110, 210 that a device could be hooked into to pull the wheel 110, 210 off of the axle 120, 220.

In another embodiment without departing from this invention, the removal of the wheel 110, 210 from the axle 120, 220 may be accomplished by loose fitting pins 130, 230 with an endcap. The wheel assembly 100, 200 may include pins 130, 230 that would not be press fit, but would therefore include an endcap to be locked into place in the holes 125, 225. The end of the shaft of the pins 130, 230 may have threading to hold the endcap on the pin 130, 230, similar to a washer on a bolt.

In another embodiment without departing from this invention, the removal of the wheel 110, 210 from the axle 120,220 may be accomplished by expandable pins/bolts. The wheel assembly 100, 200 may include expandable pins/bolts 130, 230 that may be utilized similar to concrete expansion anchors that could be tightened and therefore expanded once placed in the holes 125, 225. This design may still require an endcap to keep the pins/bolts 130, 230 from falling out in the case that the expansion bolts loosened over time.

This designs illustrated in FIGS. 2-5 and 6-8 provide many benefits over the prior art designs. The wheel assemblies 100, 200 may allow wheel 110, 210 changes in the field and may eliminate the need for major vehicle disassembly and operations only available in a factory environment. Additionally, the wheel assembly 100, 200 may significantly reduce the amount of labor required to install and remove the wheel 110, 210. The removable pin 130, 230 design allows the wheel 110, 210 to be exchanged on-site, without the need to lift the entire truck off the track 10. Additionally, the wheel assembly 100, 200 does not required a 400-ton press machine (or similar large specialize press machine) to attach and remove the wheel 110, 210 as is required with the prior art wheel/axle design.

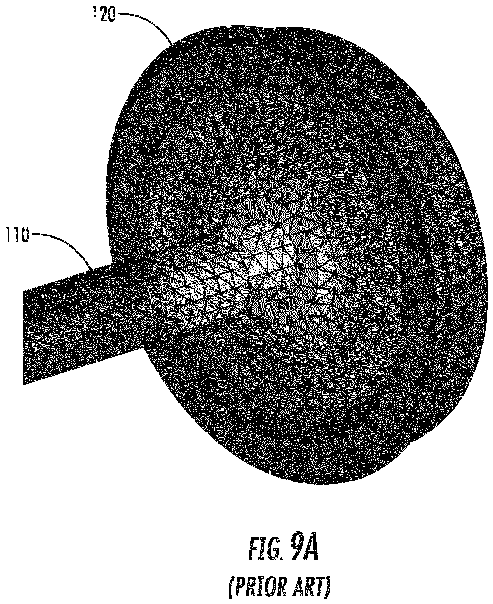

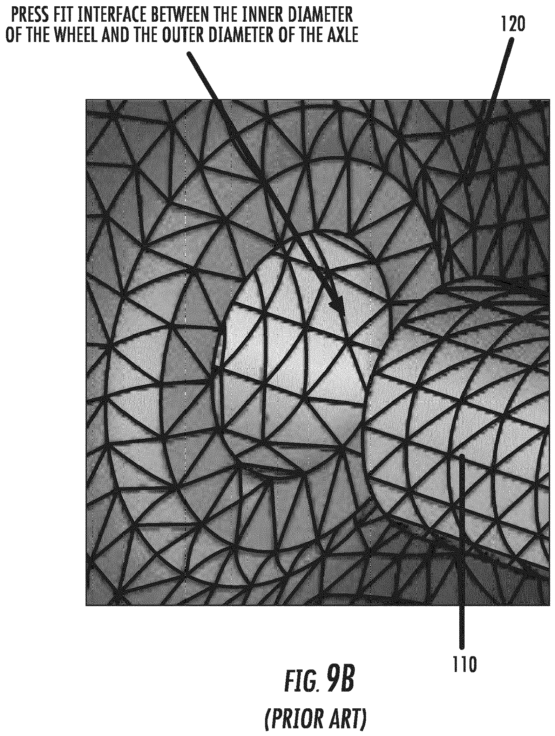

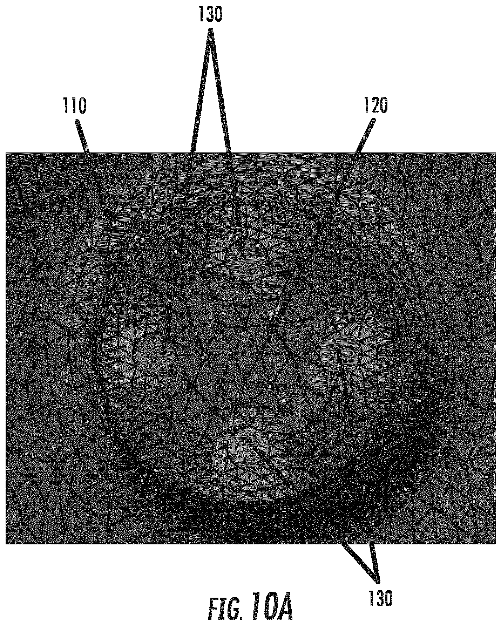

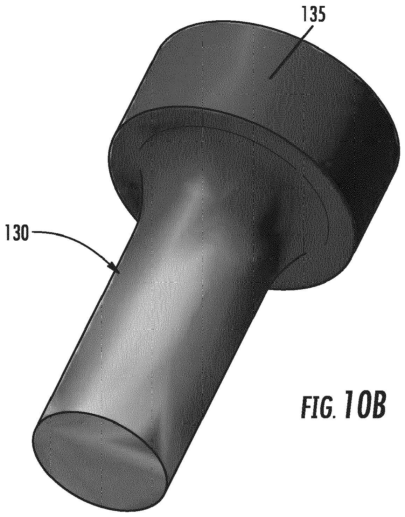

Additionally, the wheel assembly 100, 200 as described in the embodiments herein and illustrated in FIGS. 2-5 and FIGS. 6-8 produces a reduction in the maximum stresses as compared to the prior art wheel/axle design. FIGS. 9A and 9B illustrate an exemplary finite element analysis (FEA) of the prior art design with the press-fit wheel 110, 210 and axle 120, 220 and a close-up of the stresses at the inner diameter of the wheel 110, 210 and the stresses on the axle 120, 220. FIGS. 10A and 10B illustrate an exemplary FEA of the wheel assembly 100, 200 as described in the embodiments herein and illustrated in FIGS. 2-5 and FIGS. 6-8 with a FEA of a close-up of the pin 130, 230 in FIG. 10B. The FEAs calculated a maximum Von Mises stress for each design and shows a comparison of 1.43 x 10⁶ psi for the prior art wheel/axle design and 1.50 x 10⁵ psi for the wheel assembly 100, 200 as described in the embodiments herein and illustrated in FIGS. 2-5 and 6-8. The wheel assembly 100, 200 as described in the embodiments herein and illustrated in FIGS. 2-5 and 6-8 shows a reduction in the maximum stresses of approximately ten-fold.

Below illustrates a benefit summary of the prior art wheel/axle design and the wheel assembly 100, 200 as described in the embodiments herein and illustrated in FIGS. 2-5 and 6-8. Labor required: 100% (prior art design - press fit wheel/axle); 10% of labor of the prior art (removable pins and wheel assembly). Wheel/Axle Tolerance: 0.002 inches (prior art design - press fit wheel/axle); 0.010 inches (removable pins and wheel assembly). Truck removal: required (prior art design-press fit wheel/axle); not necessary (removable pins and wheel assembly). Maximum stress: 1.43 x 10⁶ psi (prior art design - press fit wheel/axle); 1.5 x 10⁵ (removable pins and wheel assembly).

The present disclosure is disclosed above and in the accompanying drawings with reference to a variety of examples. The purpose served by the disclosure, however, is to provide examples of the various features and concepts related to the disclosure, not to limit the scope of the invention. One skilled in the relevant art will recognize that numerous variations and modifications may be made to the examples described above without departing from the scope of the present disclosure.

## Claims

1. A wheel assembly for a vehicle comprising:
a wheel;
an axle with an end that fits into the center of the wheel thereby creating an interface between the wheel and the axle; and
a plurality of pins that are pressed into a plurality of pre-machined holes at the interface of the wheel and the axle, wherein the plurality of pins lock the wheel to the axle and carry a dynamic load and a static load of the vehicle.

2. The wheel assembly of claim 1, wherein the plurality of pins are pressed into the plurality of holes and pulled out of the plurality of holes with a specialized tool.

3. The wheel assembly of claim 2, wherein the plurality of pins have a unique head that allows the specialized tool to grab the plurality of pins.

4. The wheel assembly of claim 1, wherein the plurality of pins includes four pins or wherein the plurality of pins includes five pins.

5. The wheel assembly of claim 1, wherein the plurality of pins are geometrically and evenly spaced around the wheel.

6. The wheel assembly of claim 1, wherein a first set of one or more half-circle grooves are machined into an inside diameter of the wheel parallel to a centerline axis and a second set of one or more half-circle grooves are machined on an outside diameter of the axle, wherein the first set of grooves and the second set of grooves mate and align to create the plurality of holes.

7. The wheel assembly of claim 1, further including a bearing and a bearing end cap that applies a force to the bearing by pushing against the wheel;
and optionally wherein the bearing end cap applies the force to the bearing by a plurality of screws that are threaded into the end ofthe axle through the bearing end cap, and further wherein the force is generated on the bearing end cap by tightening the screws and the force is transferred through the wheel to load the bearing.

8. A rail wheel assembly for use with a rail vehicle on a rail, the rail wheel assembly comprising:
a rail wheel;
an axle with an end that fits into the center of the rail wheel thereby creating an interface between the rail wheel and the axle; and
a plurality of pins that are pressed into a plurality of pre-machined holes at the interface of the rail wheel and the axle, wherein the plurality of pins are geometrically and evenly spaced around the rail wheel, and further wherein the plurality of pins lock the rail wheel to the axle and carry a dynamic load and a static load of the rail vehicle on the rail, wherein a first set of one or more half-circle grooves are machined into an inside diameter of the rail wheel parallel to a centerline axis and a second set of one or more half-circle grooves are machined on an outside diameter of the axle, wherein the first set of grooves and the second set of grooves mate and align to create the plurality of holes.

9. The rail wheel assembly of claim 8, wherein the plurality of pins are pressed into the plurality of holes and pulled out of the plurality of holes with a specialized tool and further wherein the plurality of pins have a unique head that allows the specialized tool to grab the plurality of pins.

10. The rail wheel assembly of claim 8, wherein the plurality of pins includes four pins or wherein the plurality of pins includes five pins.

11. The rail wheel assembly of claim 8, further including a bearing and a bearing end cap that applies a force to the bearing by pushing against the rail wheel;
and optionally wherein the bearing end cap applies the force to the bearing by a plurality of screws that are threaded into the end ofthe axle through the bearing end cap, and further wherein the force is generated on the bearing end cap by tightening the screws and the force is transferred through the rail wheel to load the bearing.

12. A wheel assembly for use with a vehicle, the wheel assembly comprising:
a wheel;
an axle with an end that fits into the center of the wheel thereby creating an interface between the wheel and the axle;
a plurality of pins that are pressed into a plurality of pre-machined holes at the interface of the wheel and the axle, wherein the plurality of pins are geometrically and evenly spaced around the wheel and further wherein the plurality of pins lock the wheel to the axle and carry a dynamic load and a static load of the vehicle; and
a bearing and a bearing end cap that applies a force to the bearing by pushing against the wheel, wherein the bearing end cap applies the force to the bearing by a plurality of screws that are threaded into the end of the axle through the bearing end cap, and further wherein the force is generated on the bearing end cap by tightening the screws and the force is transferred through the wheel to load the bearing.

13. The wheel assembly of claim 12, wherein a first set of one or more half-circle grooves are machined into an inside diameter of the wheel parallel to a centerline axis and a second set of one or more half-circle grooves are machined on an outside diameter of the axle, wherein the first set of grooves and the second set of grooves mate and align to create the plurality of holes.

14. The wheel assembly of claim 12, wherein the plurality of pins are pressed into the plurality of holes and pulled out of the plurality of holes with a specialized tool and further wherein the plurality of pins have a unique head that allows the specialized tool to grab the plurality of pins.

15. The wheel assembly of claim 12, wherein the plurality of pins includes four pins or wherein the plurality of pins includes five pins.
